# EUROPEAN PATENT SPECIFICATION

(11) **EP 4 385 846 B1**
(45) Date of publication and mention of the grant of the patent: **14.10.2026**
(21) Application number: 21956441.6
(22) Date of filing: 13.09.2021
(51) Int. Cl.: B60W 40/08, B60W 40/12, B60W 50/14

(54) **METHOD AND APPARATUS FOR PROMPTING STATE INFORMATION OF VEHICLE**
VERFAHREN UND VORRICHTUNG ZUR ABFRAGE VON ZUSTANDSINFORMATIONEN EINES FAHRZEUGS
PROCÉDÉ ET APPAREIL POUR PRÉSENTER DES INFORMATIONS D'ÉTAT D'UN VÉHICULE

(43) Date of publication of application: 19.06.2024
(73) Proprietor: Yinwang Intelligent Technologies Co., Ltd., Shenzhen, Guangdong 518110 (CN)
(72) Inventor: HU, Wenxiao, Shenzhen, Guangdong 518129 (CN); GUAN, Xin, Shenzhen, Guangdong 518129 (CN)
(74) Representative: MERH-IP Matias Erny Reichl Hoffmann Patentanwälte PartG mbB
(86) International application number: PCT/CN2021/117888
(87) International publication number: WO 2023/035260

(56) References cited:
- CN-A- 107 985 077
- CN-A- 108 021 420
- CN-A- 110 356 419
- CN-A- 110 386 060
- CN-A- 110 466 530
- CN-A- 111 993 889
- CN-A- 112 214 308
- CN-S- 305 172 934
- DE-A1- 102017 215 405
- DE-A1- 102019 208 763
- US-A1- 2007 085 708
- US-A1- 2018 079 306
- US-A1- 2019 004 514

## Description

### TECHNICAL FIELD

This invention relates to the field of vehicles, and more specifically, to a method and an apparatus for indicating vehicle state information.

### BACKGROUND

To ensure safe driving, state information of a driving vehicle needs to be fed back to a driver in a timely manner. For example, a dashboard is used to indicate a state of the driving vehicle to the driver in a form of visual information, for example, remaining power of the vehicle and whether a door of the vehicle is closed. An existing vehicle state information indication is usually a mechanized indication based on a conventional entire vehicle function and state. In this indication manner, it cannot be ensured that a state that needs to be processed urgently is indicated to a user in a timely manner, and it cannot be ensured that the user can clearly learn of an operation that needs to be performed based on state information. For example, a fixed term is used to indicate information about a fault of a part of the vehicle to the user.

With popularization of driving assistant technologies and autonomous driving, state information in the vehicle becomes complex and diversified. Therefore, there is an urgent need for a method for indicating a vehicle state, to indicate the state information of the vehicle to the user in a timely manner.
Document US 2018/079306 A1 relates to a dashboard display of a vehicle that includes a display panel with a speed display area showing the vehicle's speed range at a first speed interval, and an event display area showing event information. A controller is configured to, when one or more preset conditions of the vehicle are met, change the boundary of the speed display area from a first speed display area within the display panel to a second, different speed display area within the display panel.
Document DE 102019208763 A1 relates to a method for operating a display device in a vehicle to display a symbol and/or a character representing a vehicle-related value on the display device. Depending on the priority of the vehicle-related value, a frame is displayed around the symbol and/or character, with the frame being shown in the same color as the symbol and/or character.

### SUMMARY

This invention provides a method and an apparatus for indicating vehicle state information, to indicate current state information of a vehicle to a user in a timely manner. The present invention is defined by the appended claims. In the following, parts of the description and drawings referring to former embodiments which do not necessarily comprise all features to implement embodiments of the claimed invention are understood to not represent embodiments of the invention but to relate to examples useful for understanding the embodiments of the invention.

According to a first aspect, a method for indicating vehicle state information is provided. The method includes: A controller obtains state information that needs to be indicated currently and state information that is being indicated. The state information includes a state type and state priority information. The controller determines a state indication strategy based on the state information that needs to be indicated currently and the state information that is being indicated. The state indication strategy includes a strategy of indicating the state information that needs to be indicated currently. The state type further comprises a persistence state, the persistence state is used to indicate a user to perform a corresponding operation, priority information of the persistence state is determined based on time when the user starts to perform the corresponding operation, and with accumulation of time when the user does not perform the corresponding operation, a priority of the persistence state increases.

According to the method provided in this embodiment of this invention, the controller may determine, by determining a state that needs to be indicated currently and a state type and/or priority information that are/is being indicated, to indicate a strategy of indicating information that needs to be indicated currently to a user, so that the user can learn of state information of a vehicle in a timely manner, thereby ensuring safe driving.

With reference to the first aspect, in some implementations of the first aspect, the state type includes a timing state, and the timing state includes at least one of the following states: a fault-type state, a state in which a driving assistance function partially or completely exits, a state in which the driving assistance function is actively or passively degraded, and a notification-type state.

With reference to the first aspect, in some implementations of the first aspect, that the controller determines a state indication strategy based on the state information that needs to be indicated currently and the state information that is being indicated includes: The controller determines that a state that needs to be indicated currently is the timing state, and a state that is being indicated currently includes the timing state. The controller determines the state indication strategy based on priority information of the state that needs to be indicated currently and the state that is being indicated currently. Priority information of the timing state is determined based on an emergency degree of the corresponding operation that needs to be performed by the user.

With reference to the first aspect, in some implementations of the first aspect, that the controller determines the state indication strategy based on priority information of the state that needs to be indicated currently and the state that is being indicated currently includes: If the controller determines that a priority of the state that needs to be indicated currently is higher than a priority of the state that is being indicated currently, the controller determines that the state that needs to be indicated currently interrupts the state that is being indicated currently; or if the controller determines that a priority of the state that needs to be indicated currently is lower than a priority of the state that is being indicated currently, the controller determines not to indicate the state that needs to be indicated currently.

With reference to the first aspect, in some implementations of the first aspect, that the controller determines the state indication strategy based on priority information of the state that needs to be indicated currently and the state that is being indicated currently includes: If a priority of the state that is being indicated currently is the same as a priority of the state that needs to be indicated currently, the controller determines to interrupt the state that is being indicated currently; or the controller determines to indicate, after a first time period, the state that needs to be indicated currently, where duration of the first time period is not less than remaining indication duration of the state that is being indicated.

With reference to the first aspect, in some implementations of the first aspect, that the controller determines a state indication strategy based on the state information that needs to be indicated currently and the state information that is being indicated includes: The controller determines that a state that needs to be indicated currently is the persistence state, and that a state that is being indicated currently is the timing state; and the controller determines to indicate, after a first time period, the state that needs to be indicated currently, where duration of the first time period is not less than remaining indication duration of the state that is being indicated.

With reference to the first aspect, in some implementations of the first aspect, that the controller determines a state indication strategy based on the state information that needs to be indicated currently and the state information that is being indicated includes: The controller determines that a state that needs to be indicated currently is the timing state, and a state that is being indicated currently includes the persistence state; and the controller determines that the state that needs to be indicated currently interrupts or covers the state that is being indicated currently.

With reference to the first aspect, in some implementations of the first aspect, the controller indicates, to the user according to the state indication strategy, the state that needs to be indicated currently.

With reference to the first aspect, in some implementations of the first aspect, the controller determines to indicate, to the user in a form of a pop-up window, the state that needs to be indicated currently, where a display location and a format of the pop-up window are fixed, the format of the pop-up window includes an icon and copywriting that are separately arranged on left and right, the copywriting includes state indication copywriting and copywriting of an action that needs to be performed, and the two types of copywriting are set in different lines.

With reference to the first aspect, in some implementations of the first aspect, the controller determines to indicate, to the user in a form of a combination of the pop-up window and at least one of the following forms, the state that needs to be indicated currently: a sound effect, a text to speech (text to speech, TTS) voice broadcast, head-up display (head-up display, HUD), vibration, and a light effect.

According to an example that is not covered by the claims but useful for understanding the application, an apparatus for indicating vehicle state information is provided. The apparatus includes a processing unit, configured to obtain state information that needs to be indicated currently and state information that is being indicated, where the state information includes a state type and state priority information. The processor is further configured to determine a state indication strategy based on the state information that needs to be indicated currently and the state information that is being indicated, where the state indication strategy includes a strategy of indicating the state information that needs to be indicated currently.

According to the apparatus provided in this example, by determining a state that needs to be indicated currently and a state type and/or priority information that are/is being indicated, a strategy of information that needs to be indicated currently is determined to be indicated to a user, so that the user can learn of state information of a vehicle in a timely manner, thereby ensuring safe driving.

With reference to the present example, in some implementations, the state type includes a timing state, and the timing state includes at least one of the following states: a fault-type state, a state in which a driving assistance function partially or completely exits, a state in which the driving assistance function is actively or passively degraded, and a notification-type state.

With reference to the present example, in some implementations, the state type further includes a persistence state, the persistence state is used to indicate the user to perform a corresponding operation, and priority information of the persistence state is determined based on time when the user starts to perform the corresponding operation.

With reference to the present example, in some implementations, the processing unit is specifically configured to determine that a state that needs to be indicated currently is the timing state, and a state that is being indicated currently includes the timing state. The controller determines the state indication strategy based on priority information of the state that needs to be indicated currently and the state that is being indicated currently, where priority information of the timing state is determined based on an emergency degree of the corresponding operation that needs to be performed by the user.

With reference to the present example, in some implementations, if the controller determines that a priority of the state that needs to be indicated currently is higher than a priority of the state that is being indicated currently, the processing unit is specifically configured to determine that the state that needs to be indicated currently interrupts the state that is being indicated currently; or if the controller determines that a priority of the state that needs to be indicated currently is lower than a priority of the state that is being indicated currently, the processing unit is specifically configured to determine not to indicate the state that needs to be indicated currently.

With reference to the present example, in some implementations, if a priority of the state that is being indicated currently is the same as a priority of the state that needs to be indicated currently, the processing unit is specifically configured to determine to interrupt the state that is being indicated currently; or the controller determines to indicate, after a first time period, the state that needs to be indicated currently, where duration of the first time period is not less than remaining indication duration of the state that is being indicated.

With reference to the present example, in some implementations, the processing unit is specifically configured to: determine that a state that needs to be indicated currently is the persistence state, and a state that is being indicated currently is the timing state; and determine to indicate, after a first time period, the state that needs to be indicated currently, where duration of the first time period is not less than remaining indication duration of the state that is being indicated.

With reference to the present example, in some implementations, the processing unit is specifically configured to: determine that a state that needs to be indicated currently is the timing state, and a state that is being indicated currently includes the persistence state, and determine that the state that needs to be indicated currently interrupts or covers the state that is being indicated currently.

With reference to the present example, in some implementations, the processing unit is specifically configured to indicate, to the user according to the state indication strategy, the state that needs to be indicated currently.

With reference to the present example, in some implementations, the processing unit is specifically configured to determine to indicate, to the user in a form of a pop-up window, the state that needs to be indicated currently, where a display location and a format of the pop-up window are fixed, the format of the pop-up window includes an icon and copywriting that are separately arranged on left and right, the copywriting includes state indication copywriting and copywriting of an action that needs to be performed, and the two types of copywriting are set in different lines.

With reference to the present example, in some implementations, the processing unit is configured to determine to indicate, to the user in a form of a combination of the pop-up window and at least one of the following forms, the state that needs to be indicated currently: a sound effect, a text to speech (text to speech, TTS) voice broadcast, head-up display (head-up display, HUD), vibration, and a light effect.

According to another example that is not covered by the claims but useful for understanding the application, an apparatus for indicating vehicle state information is provided, including a memory and a processor. The memory stores computer program instructions, and the processor runs the computer program instructions to implement the method according to any one of the first aspect or the possible implementations of the first aspect.

According to a second aspect, an apparatus for indicating vehicle state information is provided, including a processor and an interface circuit. The processor is coupled to a memory through the interface circuit, and the processor is configured to execute program code in the memory to implement the method according to any one of the first aspect or the possible implementations of the first aspect.

According to a third aspect, a vehicle is provided, including the apparatus of the second aspect.

According to a fourth aspect, a computer-readable storage medium is provided, including computer instructions. When the computer instructions are run by a processor, a vehicle control apparatus is enabled to implement the method according to any one of the first aspect or the possible implementations of the first aspect.

According to a fifth aspect, a computer program product is provided. When the computer program product runs on a processor, a vehicle control apparatus is enabled to implement the method according to any one of the first aspect or the possible implementations of the first aspect.

### BRIEF DESCRIPTION OF DRAWINGS

FIG. 1 is a functional block diagram of a vehicle according to an embodiment of this invention;
FIG. 2 is a schematic flowchart of a method for indicating vehicle state information according to an embodiment of this invention;
FIG. 3 is a schematic diagram of an interface for indicating vehicle state information according to an embodiment of this invention;
FIG. 4 is a schematic diagram of a format of a pop-up window for indicating vehicle state information according to an embodiment of this invention;
FIG. 5 is a schematic diagram of a structure of an apparatus according to an embodiment of this invention;
FIG. 6 is a schematic diagram of a structure of a controller according to an embodiment of this invention; and
FIG. 7 is a schematic diagram of a structure of a vehicle according to an embodiment of this invention.

### DESCRIPTION OF EMBODIMENTS

The following describes technical solutions of this invention with reference to the accompanying drawings.

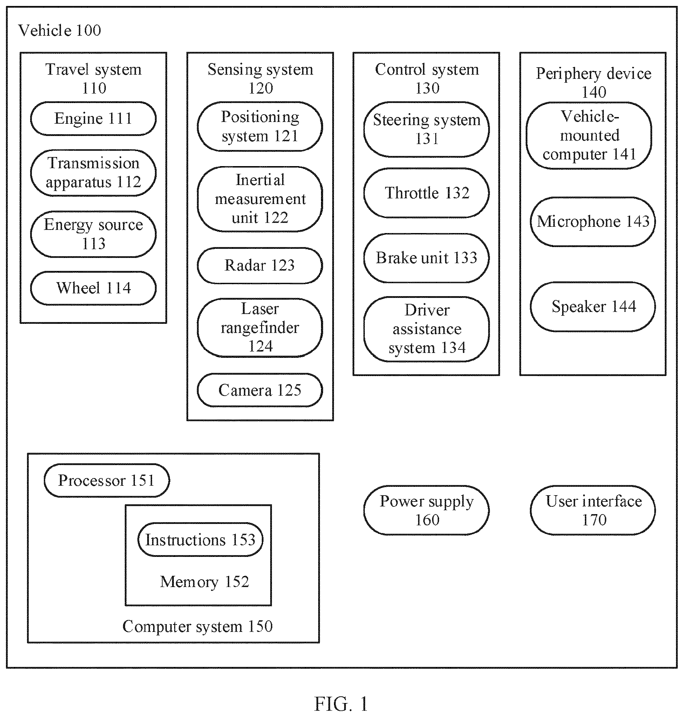

FIG. 1 is a functional block diagram of a vehicle 100 according to an embodiment of this invention. The vehicle 100 may be a manually driven vehicle, or the vehicle 100 may be configured in a fully or partially autonomous driving mode.

The vehicle 100 may include various subsystems, for example, a travel system 110, a sensing system 120, a control system 130, one or more peripheral devices 140, a computer system 150, a power supply 160, and a user interface 170.

Optionally, the vehicle 100 may include more or fewer subsystems, and each subsystem may include a plurality of elements. In addition, each subsystem and element of the vehicle 100 may be interconnected in a wired or wireless manner.

For example, the travel system 110 may include a component for providing power motion to the vehicle 100. In an embodiment, the travel system 110 may include an engine 111, a transmission apparatus 112, an energy source 113, and a wheel/tire 114.

The engine 111 may convert the energy source 113 into mechanical energy. The transmission apparatus 112 may transmit mechanical power from the engine 111 to the wheel 114. The energy source 113 is configured to provide energy for another system of the vehicle 100.

For example, the sensing system 120 may include several sensors configured to sense surrounding environment information of the vehicle 100. For example, the sensing system 120 may include a positioning system 121 (for example, a GPS system, a BeiDou system, or another positioning system), an inertial measurement unit (inertial measurement unit, IMU) 122, a radar 123, a laser rangefinder 124, and a camera 125. The sensing system 120 may further include a sensor (for example, an in-vehicle air quality monitor, a fuel gauge, and an oil temperature gauge) for monitoring an internal system of the vehicle 100. Sensor data from these sensors may be used to detect an object and its corresponding state (performance, position, shape, direction, speed, and the like). Such detection and recognition may be used by the vehicle 100 to determine a vehicle state that is indicated to a user, to ensure a safe operation of the user.

The control system 130 may be configured to control operations of the vehicle 100 and components of the vehicle 100. For example, the control system 130 may include a driver assistance system 134. The driver assistance system 134 may include an information assistant system and a control assistant system. The driver assistance system 134 may process and analyze sensor data obtained by the sensing system 120, and perform static and dynamic object and/or feature recognition based on the sensor data. The foregoing object and/or feature may include a traffic signal, a road boundary, and an obstacle, so that a possible situation or danger can be detected in advance, to assist a driver in convenient and safe driving.

Optionally, as shown in FIG. 1, the vehicle 100 may further interact with an external sensor, another vehicle, another computer system, or the user through the peripheral device 140. For example, the peripheral device 140 may include a vehicle-mounted computer 141, a microphone 142, a speaker 143, and the like. For example, the vehicle-mounted computer 141 may provide information for the user of the vehicle 100, and the vehicle-mounted computer 142 receives an input of the user through a user interface 170. In another case, the peripheral device 140 may provide a means for the vehicle 100 to communicate with another device in the vehicle. For example, the microphone 142 may receive audio (for example, a voice command or another audio input) from the user of the vehicle 100. Similarly, the speaker 143 may output audio to the user of the vehicle 100.

For example, some or all of functions of the vehicle 100 may be controlled by the computer system 150, where the computer system 150 may include at least one processor 151, and the processor 151 executes instructions 153 stored in, for example, a non-transient computer-readable medium in a memory 152. The computer system 150 may alternatively be a plurality of computing devices that control individual components or subsystems of the vehicle 100 in a distributed manner.

For example, the processor 151 may be any conventional processor, for example, a commercially available CPU.

Optionally, the processor may be a dedicated device, for example, an ASIC or another hardware-based processor. Although FIG. 1 functionally illustrates the processor, the memory, and other elements of a computer in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Therefore, it is understood that a reference to the processor or the computer includes a reference to a set of processors or computers or memories that may or may not operate in parallel. Different from using a single processor to perform the steps described herein, some components such as a steering component and a deceleration component each may include a processor. The processor performs only computation related to a component-specific function.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

In some embodiments, the memory 152 may include the instructions 153 (for example, program logic), and the instructions 153 may be executed by the processor 151 to perform various functions of the vehicle 100, including the functions described above. The memory 152 may also include additional instructions, including instructions to send data to, receive data from, interact with, and/or control one or more of the travel system 110, the sensing system 120, the control system 130, and the peripheral device 140.

For example, in addition to the instructions 153, the memory 152 may also store data, such as road maps, route information, locations, directions, and speeds of the vehicle, other such vehicle data, and other information. Such information may be used by the vehicle 100 and the computer system 150 during operation of the vehicle 100 in an autonomous mode, a semi-autonomous mode, and/or a manual mode.

Optionally, one or more of the foregoing components may be installed separately from or associated with the vehicle 100. For example, the memory 152 may exist partially or completely separate from the vehicle 100. The foregoing components may be communicatively coupled together in a wired and/or wireless manner.

In this embodiment of this invention, the computer system 150 may control the functions of the vehicle 100 based on inputs received from various subsystems (for example, the travel system 110, the sensing system 120, and the control system 130) and the user interface 170. For example, the computer system 150 may determine state information of the vehicle 100 based on inputs from the control system 130 and the sensing system 120, or the computer system 150 may further determine the state information of the vehicle 100 based on the data stored in the memory 152.

In this invention, the vehicle 100 may be a moving autonomous driving vehicle, and "autonomous driving" herein may be fully autonomous driving, or may be driver-assisted autonomous driving. A level of autonomous driving may be determined based on the society of automotive engineers (society of automotive engineers, SAE) classification standard, and may be divided into an L0 level, an L1 level, an L2 level, an L3 level, an L4 level, and an L5 level. The L0 level is non-autonomous driving, and the driver operates the vehicle throughout a process completely. The L1 level is driving support, to be specific, the driver assistance system can control one of steering and deceleration based on judgment of the environment to provide driving support. L1-level autonomous driving has a driving assistance function, but operation of the driver is a main part. L2-level autonomous driving is a partial autonomous driving, to be specific, the driver assistance system may control steering, acceleration, and deceleration of the vehicle based on judgment of a surrounding environment, so that the driver can take a short rest. When the vehicle is in L2-level autonomous driving, the driver needs to pay attention to traffic conditions on the road and be ready to take over the vehicle at all time. L3-level autonomous driving is a condition-constrained autonomous driving, to be specific, the driver assistance system completes all driving operations under a condition, and the driver provides adaptive responses based on a system request. L4-level autonomous driving is highly autonomous driving, to be specific, the driver assistance system can complete all driving operations, and when driving on a conditional road, the driver can completely free the hands. L5-level autonomous driving is fully autonomous driving. This level of autonomous driving achieves a true sense of autonomous driving, and the driver can sleep in the vehicle, play games online, chat, and so on.

It can be learned from the foregoing that, for vehicles equipped with different levels of autonomous driving, prerequisites for operating the driver assistance system 134 and invention scopes may also be different based on different levels of autonomous driving intelligence of the vehicles. The driver assistance system 134 can be guaranteed to operate normally only when corresponding conditions are met. Conversely, the driver assistance system 134 may be faulty if any one of prerequisites is not met.

For example, in autonomous driving with a high level of autonomous driving intelligence (for example, L3-level autonomous driving), the driver assistance system 134 may include a navigation cruise assistant (navigation cruise assistant, NCA) system. The NCA system can adapt to a complex road condition, and can automatically take an appropriate measure (for example, acceleration, deceleration, braking, and lane change) based on map information, to control the vehicle to reach a destination on a map. The NCA system can implement lateral and longitudinal motion control of the vehicle, and can select an appropriate lane based on a road condition to implement autonomous driving. In some cases, for example, when the vehicle moves out of a high definition map area or a navigation signal is lost, the NCA system automatically exits or degrades.

In autonomous driving with a lower level autonomous driving intelligence (for example, L2-level autonomous driving), the driver assistance system 134 may include an intelligent cruise assistance (intelligent cruise assistant, ICA) system. The ICA system can implement lateral and longitudinal motion control of the vehicle by continuously controlling the engine 111, the transmission apparatus 112, a brake unit 132, or the like. By keeping a proper distance from a front vehicle and through lateral motion control within a lane line range, labor intensity of the driver is reduced, to ensure driving safety. In some cases, for example, when a lane line is blurred or the vehicle deviates from a current lane line, the ICA system can automatically exit or degrade.

In autonomous driving with a low degree of autonomous driving intelligence (for example, L1-level and L2-level autonomous driving), the driver assistance system 134 may further include an adaptive cruise control (adaptive cruise control, ACC) system. The ACC system can implement longitudinal motion control of the vehicle. By keeping a proper distance from a front vehicle, driving assistance is implemented, and the vehicle usually has a predetermined vehicle speed range, for example, 65 km/h to 120 km/h. If a vehicle speed is out of the range (for example, the vehicle speed is less than 65 km/h or greater than 120 km/h), the ACC system automatically exits.

It should be understood that the NCA system, the ICA system, and the ACC system are merely examples for describing a driver assistance system that may be currently configured for the vehicle. Another driver assistance system may be further configured for the vehicle, to assist the driver in driving.

When the vehicle is in an inappropriate state (for example, some components in the foregoing description are faulty), or a use condition of the foregoing driver assistance system is not met, the driver assistance system 134 may actively or passively exit some functions. To ensure safe driving, current state information of the vehicle needs to be indicated to the user in a timely and clear manner. As an environment (including an environment of the vehicle and a surrounding environment) of the vehicle becomes complex, an effective solution for indicating vehicle state information is urgently needed, to feed back state information of the vehicle in driving to the user in a timely and clear manner.

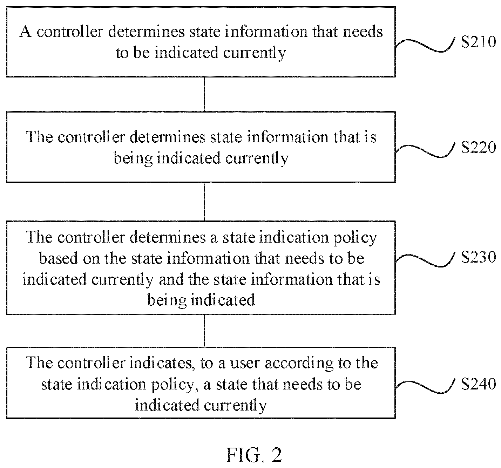

In view of this, an embodiment of this invention provides a method for indicating vehicle state information. The following describes in detail the method provided in embodiments of this invention with reference to FIG. 2 to FIG. 5. The method may be performed by a controller. The controller may be a controller in the control system 130 or the computing system 150, or may be a chip, a circuit, a component, a system, or a mobile terminal disposed in a vehicle. This is not limited in this invention.

FIG. 2 is a schematic flowchart of a method for indicating vehicle state information according to this invention. As shown in FIG. 2, the method may include at least the following steps.

S210: A controller determines state information that needs to be indicated currently by a vehicle.

The state information that needs to be indicated currently may include at least one of the following information: a type of a state that needs to be indicated currently, and priority information of the state that needs to be indicated currently.

For example, the controller may obtain and determine, through another component in a vehicle, for example, a control system 150, the state information that needs to be indicated currently, or the controller may further determine, based on sensor data obtained from a sensing system 120, the state information that needs to be indicated currently.

The type of the state that needs to be indicated currently may include a timing state and a persistence state. The timing state may be understood as indicating the state information to a user in a time period. For example, indication duration may be 4s. The persistence state may be understood as continuously indicating the state information to the user until the user makes a corresponding response. For example, when hands of a driver are detached from a steering wheel, a hand-off reminder may be indicated until the hands of the driver hold the steering wheel.

A priority of the timing state may be set in descending order based on an urgency degree of responding to the state by the user, for example, may be set to A1 to A4. A state corresponding to an A1 level may be an extremely dangerous state, and the user needs to immediately respond to the state. An A2-level state may be a dangerous state, and in this state, the vehicle may continue to travel, but the user needs to respond as soon as possible. An A3-level state may be an ordinary dangerous state, and when the state appears, the user may be notified to pay attention to the state, and does not need to process the state as soon as possible. An A4-level state may include a common notification state, that is, a state changes in this case, but the user only needs to know the state.

A vehicle in autonomous driving is used as an example. An A1-level state may include a fault-type state. The fault-type state may be a fault of a component and a driver assistance system in the vehicle, or exit of some driving assistance functions. For example, a state in which an ICA passively exit may be configured as the A1-level state.

The A2-level state may include passive degradation of some driving assistance functions. The passive degradation may be understood as degradation under a non-manual operation. For example, in a process of using driving assistance, if a condition to which NCA is applicable changes (for example, leaving a high definition map area), driving assistance may be passively degraded to ACC. The driving assistance function after passive degradation requires user assistance to coordinate a steering wheel or brake. Therefore, a passive degradation state of the driving assistance function may be set to an A2 level, that is, the vehicle may continue to travel, but the user needs to respond as soon as possible.

The A3-level state may include degradation or exit of some driving assistance functions. Degradation of the driving assistance function may include active degradation or passive degradation. Exit of the driving assistance function may include active exit. Active degradation or exit may be understood as degradation or exit determined by the controller based on a manual operation. For example, the controller may determine, based on a peripheral device 140 or a user interface 170, that the driving assistance function needs to actively degrade or exit. In some scenarios, if the controller determines that the driving assistance function after degradation is a driving assistance function that does not require a manual operation, the controller may determine a current state as an A3 level. For example, the driving assistance function degrades from an NCA cruise to an ICA cruise actively or passively; or if the controller determines that degradation or exit of the driving assistance function is an active operation, the controller may determine a current state as the A3 level.

An A4-level state indication may include an indication of a state of a current driving assistance function, for example, an indication indicating that NCA or ICA is available or unavailable, or NCA or ICA is in a standby (standby), active (active), or on state.

It should be understood that the foregoing setting of a priority of a state of the vehicle in autonomous driving is merely an example, and more or fewer priorities may be set based on an actual requirement, and priorities corresponding to more states of the vehicle in autonomous driving may be separately set.

Optionally, the controller may further determine, based on a user behavior, state information that needs to be indicated currently. In some autonomous driving scenarios, the user needs to perform an assistant operation to assist autonomous driving. For example, during an ACC cruise, the user needs to assist in coordinating the steering wheel. In this case, if the controller determines that the user does not perform a corresponding operation, the controller may determine to indicate persistence state information to the user. In other words, the controller may continuously indicate the state information to the user until the user performs the corresponding operation.

Optionally, the controller may further determine priority information of the persistence state based on information about time when the user does not perform the corresponding operation.

In an example, if the controller determines that the time when the user does not perform the corresponding operation exceeds first preset duration, for example, the first preset duration is 1 minute, the controller determines that the persistence state is the A3 level, and the controller may indicate the persistence state to the user. If the controller determines that the time when the user does not perform the corresponding operation exceeds second preset duration, the controller determines that the persistence state is the A2 level. For example, the second preset duration may be preset duration after the controller indicates the A3-level persistence state to the user. In other words, if the user does not perform a response operation after the A3-level persistence state is indicated, and the time when the operation is not performed reaches the second preset duration, the A3-level persistence state is upgraded to the A2 level. If the controller determines that the time when the user does not perform the operation exceeds third preset duration, the controller determines to upgrade the persistence state to the A1 level. In other words, with accumulation of the time when the user does not perform the corresponding operation, a priority of the persistence state also increases.

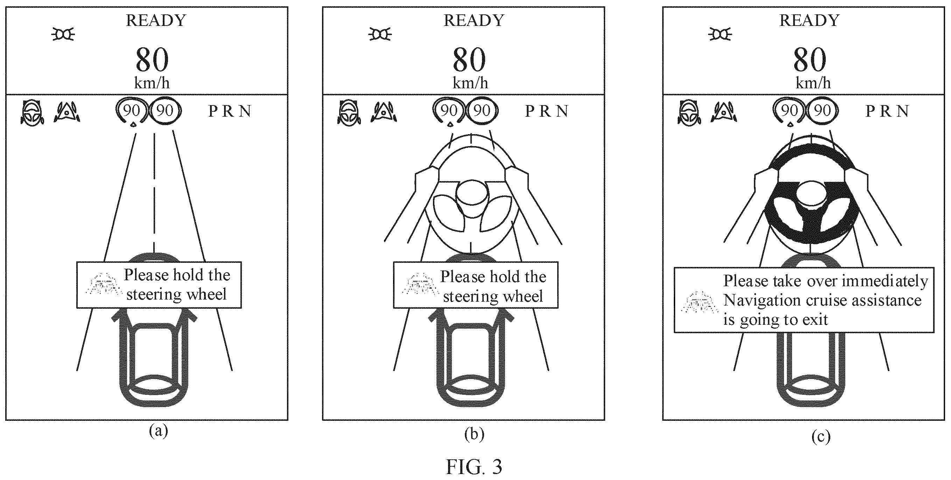

For example, as shown in (a) in FIG. 3 to (c) in FIG. 3, during the ACC cruise, if the controller determines that time when both hands of the user are detached from the steering wheel exceeds 1 minute, the controller determines to indicate the A3-level persistence state to the user; and 1 minute after a first indication, if the controller determines that the user still does not hold the steering wheel, the controller determines to increase the priority of the persistence state to the A2 level. After 1 minute of indicating the A2-level persistence state information to the user, if the controller determines that the user still does not hold the steering wheel, the controller determines to increase the priority of the persistence state to the A1 level, and the state is continuously indicated until the user holds the steering wheel.

S220: The controller determines state information that is being indicated currently.

The state information that is being indicated currently may be information about a state that is determined by the controller last time and that needs to be indicated. For example, the controller may determine, through stored information about the state that needs to be indicated last time, the state information that is being indicated currently. The state information that is being indicated currently includes a type of a state that is being indicated currently and priority information of the state that is being indicated currently.

S230: The controller determines a state indication strategy based on the state information that needs to be indicated currently and the state information that is being indicated.

If the controller determines that the state that needs to be indicated currently is the persistence state, the controller determines to indicate the state that needs to be indicated currently after an indication of the state that is being indicated currently ends. Optionally, the controller may further determine priority information of the state that is being indicated currently. If the state that is being indicated currently is the A1 level, the controller may control not to process the state that needs to be indicated currently, as shown in a last row in Table 1.

It should be noted that the controller may determine that the state that needs to be indicated currently is the persistence state only when the state that is being indicated currently is the timing state. Because indication time of the persistence state is related to time of performing an operation by the user, if the persistence state is being indicated currently, the controller does not need to indicate a new persistence state.

If the controller determines that the state that needs to be indicated currently is the timing state, the controller determines, based on the priority information of the state that needs to be indicated currently and the state information that is being indicated currently, an indication strategy of the state that needs to be indicated currently. Based on different types of the state that is being indicated currently, there are two cases in which the controller determines the indication strategy of the state that needs to be indicated currently.

Case 1: The controller determines that the state that is being indicated currently is the timing state.

In this case, if the controller determines that a priority of the state that needs to be indicated currently is higher than a priority of the state that is being indicated, the controller determines to indicate the state that needs to be indicated currently to the user, and the controller determines that the state that needs to be indicated currently interrupts the state that is being indicated. For example, the controller may control a state pop-up window that needs to be indicated currently to interrupt a state pop-up window that is being indicated. As shown in Table 1, when the state that is being indicated currently is the timing state, the state that needs to be indicated currently is shown in an upper right corner of a diagonal.

If the controller determines that the priority of the state that needs to be indicated currently is the same as the priority of the state that is being indicated, the controller may determine, based on the priority information, whether to indicate the state that needs to be indicated. If the controller determines that the state that is being indicated currently is the A1-level state, and the state that needs to be indicated currently is also at the A1 level, the controller determines not to process the state that needs to be indicated. Generally, for the A1-level state, the user needs to immediately respond to the state. For example, the user needs to immediately take over the steering wheel, step on the brake, and the like. Therefore, if there is an A1-level state that is being indicated, the A1-level state does not need to be indicated again. If the controller determines that the state that is being indicated currently and the state that needs to be indicated currently are at the A2 level, the controller determines that the state that needs to be indicated interrupts an A2-level state that is being indicated; or if the controller determines that the state that is being indicated currently and the state that needs to be indicated currently are at the A3 level or A4 level, the controller determines to indicate the state that needs to be indicated after a first time period. The first time period may be greater than remaining display duration of an A3 or A4-level state that is being indicated. For example, the state that needs to be indicated may be indicated 0.5 second after an indication of a same-level state that is being indicated ends. The A3 or A4-level state does not need the user to respond as soon as possible, and therefore may wait in a queue until a previous indication ends and then be indicated. As shown in Table 1, when the state that is being indicated currently is the timing state, the state that is needs to be indicated currently is shown by the diagonal.

If the controller determines that the priority of the state that needs to be indicated currently is lower than the priority of the state that is being indicated, the controller may determine not to process the state that needs to be indicated. As shown in Table 1, when the state that is being indicated currently is the timing state, the state that needs to be indicated currently is shown in a lower left corner of the diagonal.

Case 2: The controller determines that the state that is being indicated currently is the persistence state.

In this case, if the controller determines that the priority of the state that needs to be indicated currently is at the A1 level, the controller determines that the state that needs to be indicated currently interrupts a persistence state that is being indicated currently; or if the controller determines that the state that needs to be indicated currently is at the A2 level to the A4 level, the controller determines to cover the persistence state that is being indicated currently. In other words, for a timing state with a high priority, the user needs to respond to the state immediately, and in this case, the persistence state does not need to be indicated to the user. For a timing state that the user does not need to respond as soon as possible, the timing state may cover the persistence state that is being indicated currently, and if the user does not perform an operation that needs to be performed by the persistence state after an indication of a timing state that needs to be indicated currently ends, the persistence state may continue to be indicated. The foregoing state indication policies are as shown in Table 1.

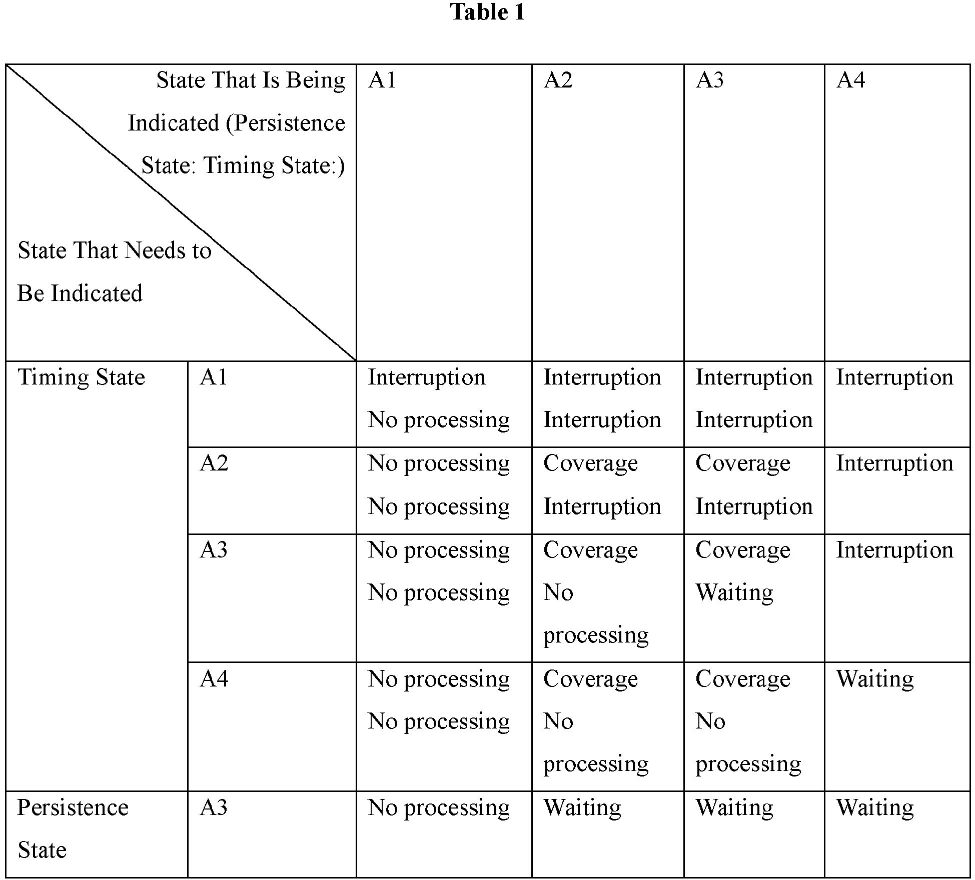

S240: The controller indicates, to the user according to the state indication strategy, the state that needs to be indicated currently.

According to the foregoing state indication strategy, the controller may determine whether to indicate the state that needs to be indicated currently to the user, or in which manner, for example, an interruption or a coverage manner, to indicate the state that needs to be indicated currently to the user.

If the controller determines to indicate a current state of the vehicle to the user, an indication form of the state may include a form of a pop-up window. For the timing state, the pop-up window can be set to be displayed for several seconds after being displayed. For example, stay duration may be set to 4 seconds. For the persistence state, the pop-up window may be set to be displayed continuously until the user performs the corresponding operation.

A specific form of the pop-up window may be configured in the controller. For timing states of different levels A1 to A4, pop-up windows of a same size and size may be set. In addition, a same display location may be set, for example, may be set below a middle part of a dashboard, or may be set below vehicle display of an autonomous driving area. In this way, the user can intuitively determine a current driving state of the vehicle without blocking other important driving information.

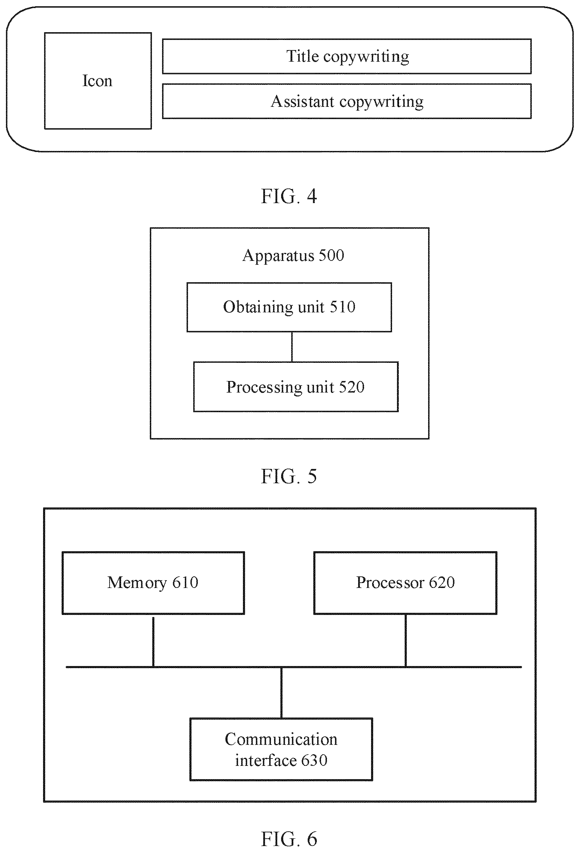

In an example, a pop-up window used for indicating the timing state may be configured to be in a style of a rounded rectangle, as shown in FIG. 4. In addition, different pop-up window colors may be set for states with different priorities. For example, a pop-up window of the A1-level state may be set to red, and a pop-up window of the A2-level state may be set to yellow.

Content displayed in the pop-up window may be arranged in a left-right layout. A visual icon (icon) related to a state is included on a left side, to quickly convey to the user. Copywriting related to the state may be included on a right side, to facilitate understanding of the user. As shown in FIG. 4, the copywriting on the right side may include a title copywriting and an assistant copywriting. In a general setting, the title copywriting may include a state description, and the assistant copywriting may include an action that needs to be performed by the user. For clarity, copywriting corresponding to the state description and the action that needs to be performed by the user may be displayed in different lines. For example, a first line may display the state, and the action that needs to be performed by the user is displayed in a different line. For example, in the A2-level state in which ICA passively degrades to ACC, a first line of the copywriting may display "Please hold the steering wheel", and a second line may display "Degradation to adaptive cruise has completed". In indications of states of some priorities, the title copywriting may also be a fault type, and the assistant copywriting is an action that needs to be performed, or the assistant copywriting may be a state, as shown in Table 2. For example, "System fault" and "Intelligent driving is temporarily unavailable" are displayed in two lines. In states of other priorities, the title copywriting and the assistant copywriting may be respectively a high-priority action and a next action. For example, "Please take over immediately" and "Close the door" are displayed in two lines. In indications of some states with low-priorities, only the title copywriting or the assistant copywriting may be indicated. For example, if ICA actively degrades to ACC, that "Degradation to adaptive cruise has completed" may be indicated.

**Table 2**

| | Category | Copywriting |
|---|---|---|
| Copywriting in a Pop-Up | Conventional | Title: Action |
| Window | | Appendix: State |
| | Special Case 1 | Title: Fault Type |
| | | Appendix: Action or State |
| | Special Case 2 | Title: High-Priority Action |
| | | Appendix: Next Step |

For quick understanding by the user, punctuation may not be used in the copywriting, and both the title copywriting and the assistant copywriting are complete statements. To further quickly and clearly convey the state to the user, a color halo may be disposed on top of a pop-up window of a high-priority state. For example, a red halo may be disposed on top of the pop-up window of the A1-level state for assistance. In addition, when a state in which the driving assistance function exits, in addition to a pop-up window, an animation effect of holding the steering wheel and stepping the brake may be displayed, to highlight an action that the user needs to take immediately.

The state of the vehicle in autonomous driving is used as an example. The state that needs to be indicated currently may include states shown in Table 3. The pop-up window may be classified into a conventional timing state pop-up window (Toast) and a take over request (take over request, TOR) pop-up window that requires the user to take over. A last column in Table 3 shows state indication copywriting of different levels.

**Table 3**

| Main Function | Sub-Function | Function Segmentation | Pop-up Window | Level | Copywriting |
|---|---|---|---|---|---|
| Fault Type | Driving assistance fault | Fault occurring during driving assistance | TOR | A1 | Please take over immediately |
| | | | | | Driving assistance function fault |
| Intelligent Cruise | ICA | Available | / | A4 | / |
| | | Standby (standby) 5 to 10 minutes | Toast | A4 | Please click a * button to restore an intelligent |
| | | | | | cruise system |
| | | Standby 10+ minutes | Toast | A4 | Waiting timed out |
| | | | | | Intelligent cruise assistance has exited |
| | | Active (active) | / | A4 | / |
| | | Passively exit | TOR | A1 | Please take over immediately |
| | | | | | Intelligent cruise assistance has exited |
| | | Actively exit | Toast | A3 | Intelligent cruise assistance has exited |
| | | Passively degrade to ACC | TOR | A2 | Please hold the steering wheel |
| | | | | | Degradation to adaptive cruise has completed |
| | | Actively degrade to ACC | / | A4 | Degradation to adaptive cruise has completed |
| | | Unavailable | / | A4 | / |
| | NCA | Available | / | A4 | / |
| | | Standby (standby) 5 to 10 minutes | Toast | A4 | Please click a * button |
| | | | | | Navigation cruise assistance has been restored |
| | | Standby 10+ minutes | Toast | A4 | Waiting timed out |
| | | | | | Navigation cruise assistance has exited |
| | | Active (active) | / | A4 | / |
| | | Actively degraded to ICA | Toast | A3 | Degradation to intelligent cruise assistance has completed |
| | | Passively degrade to | Toast | A3 | Leave a high definition |
| | | ICA (Leave a high definition map area) | | | map area Degradation to intelligent cruise assistance has completed |
| | | Passively degrade to ACC | TOR | A2 | Please hold the steering wheel |
| | | | | | Degradation to adaptive cruise has completed |
| | | Actively degrade to ACC | TOR | A3 | Degradation to adaptive cruise has completed |
| | | Passively exit | TOR | A1 | Please take over immediately |
| | | | | | Navigation cruise assistance has exited |
| | | Actively exit | Toast | A3 | Navigation cruise assistance has exited |

It should be understood that the state indication information of vehicle in autonomous driving in Table 3 is merely an example. State indication information of more states may be set for the vehicle in autonomous driving based on an actual requirement, and state indication copywriting corresponding to the state indication information may be separately set.

Optionally, an indication form of the state may further include a plurality of other forms or a combination of a plurality of forms. The plurality of forms may include at least one of the following: a sound effect, a text to speech (text to speech, TTS) voice broadcast, head-up display (head-up display, HUD), vibration, a light effect, and the like.

According to different levels of state information that is indicated, one of the foregoing state indication forms or a combination of a plurality of indication forms may be set. For example, a combination of a large quantity of state indication forms is set for state information with a high priority, and a small quantity of state indication forms is set for state information with a low priority, so that the user can clearly learn of current state information of the vehicle in a timely manner.

In an example, as shown in Table 4, a combination of a plurality of forms of the pop-up window, the sound effect, the TTS voice broadcast, a steering wheel vibration, and an atmosphere light may be set for the A1-level state, to clearly and intuitively indicate a current state with a highest priority of the vehicle to the user. A combination of the plurality of forms may also be set for indicating an A2 state. A combination of the pop-up window, the TTS, and the sound effect may be used in an A3-level state indication. For example, the TTS voice broadcast may be set to be used when a dangerous state, for example, function exit or degradation is indicated, or in some cases, an indication may be performed only in a form of the pop-up window and the sound effect. A combination of the pop-up window and the sound effect may be used in the A4-level state indication. Different colors may be set for display of the foregoing atmosphere light based on different state priorities, for example, the A1-level state is set to red, and the A2-level state is set to yellow. A sound effect material with different alert degrees and recognition degrees may be used for sound effect timbre setting based on different state priorities.

It should be understood that the foregoing combination indication forms of the pop-up window and other forms are merely examples. Different combination forms may be set for state information with different priorities based on an actual situation, to clearly indicate the current state information of the vehicle to the driver in a timely manner.

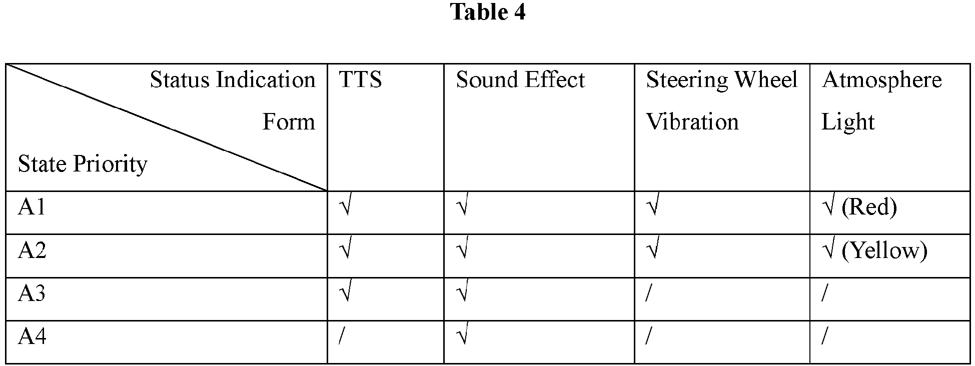

In a possible indication manner, the controller may further control a broadcast strategy of the state indication TTS to be detailed, concise, or sound-only. A detailed broadcast strategy may include a broadcast sound effect and all copywriting content in a pop-up window. A concise broadcast may be a sound effect and a part of copywriting, for example, only the broadcast sound effect and a first line of the copywriting. Moreover, when state indication TTS broadcast overlaps with other information broadcast in the vehicle, for example, navigation broadcast, music broadcast, and phone call, the controller may control the state indication TTS to first perform navigation broadcast; when the state indication TTS broadcast overlaps with the music broadcast, the controller may control the state indication TTS to broadcast in the concise broadcast strategy; and when the controller determines that state broadcast TTS overlaps with the phone call, the controller may control the state indication TTS to broadcast only a sound. In state indication with the sound effect, the controller may control that the sound effect and the pop-up window appear at the same time, and start to broadcast TTS after the sound effect ends.

With reference to FIG. 2 and FIG. 4, the foregoing describes in detail the method for indicating vehicle state information provided in embodiments of this invention. With reference to FIG. 5 to FIG. 7, the following describes an apparatus for indicating vehicle state information provided in embodiments of this invention.

Refer to FIG. 5. FIG. 5 is a block diagram of a structure of an apparatus 500 for indicating vehicle state information according to this invention. As shown in FIG. 5, the apparatus 500 may include an obtaining unit 510 and a processing unit 520.

The obtaining unit 510 is configured to obtain state information of a vehicle.

The processing unit 520 is configured to determine, based on the state information of the vehicle, a strategy of indicating the state information to a user.

Specifically, the processing unit 520 may be configured to determine state information that needs to be indicated currently and state information that is being indicated currently, and determine, based on the state information that needs to be indicated currently and a state that is being indicated, the strategy of indicating the state information to the user.

For example, the obtaining unit 510 includes a sending unit or a receiving unit.

The sending unit is configured to indicate state information of the vehicle that needs to be indicated currently to the user. The receiving unit may be configured to receive an operation or instructions input by the user.

The apparatus 500 corresponds to an execution body of the foregoing method embodiment. The apparatus 500 may be the vehicle in the method embodiment, or a chip, a circuit, a component, a system, or a functional module in the vehicle in the method embodiment. Corresponding units of the apparatus 500 are configured to perform corresponding steps in the method embodiment shown in FIG. 2.

Only one or more of units in the apparatus 500 may be implemented by software, hardware, firmware, or a combination thereof. The software or firmware includes but is not limited to computer program instructions or code, and may be executed by a hardware processor. The hardware includes but is not limited to various integrated circuits, for example, a central processing unit (CPU), a digital signal processor (DSP), a field programmable gate array (FPGA), or an application-specific integrated circuit (ASIC). The foregoing units may exist independently, or may be all or partially integrated.

FIG. 6 is a schematic block diagram of a controller according to an embodiment of this invention. The controller shown in FIG. 6 may include a memory 610, a processor 620, and a communication interface 630. The memory 610, the processor 620, and the communication interface 630 are connected through an internal connection path. The memory 610 is configured to store instructions. The processor 520 is configured to execute the instructions stored in the memory 620, to control the communication interface 630 to receive/send information. Optionally, the memory 610 may be coupled to the processor 620 through an interface, or may be integrated with the processor 620.

It should be noted that the communication interface 630 uses an apparatus, for example but not limited to an input/output interface (input/output interface), to implement communication between the controller and another device or a communication network.

In an implementation process, steps of the foregoing method may be performed by an integrated logic circuit of hardware in the processor 620 or by instructions in a software form. The method with reference to embodiments of this invention may be directly performed by a hardware processor, or may be performed through a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 610. The processor 620 reads information from the memory 610 and performs the steps of the foregoing method through the hardware of the processor 620. To avoid repetition, details are not described herein again.

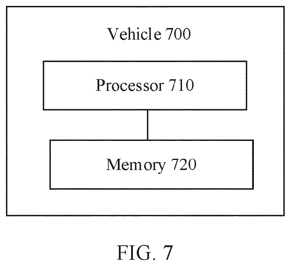

FIG. 7 is a schematic diagram of a structure of a vehicle 700 applicable to an embodiment of this invention. For ease of description, FIG. 7 shows only main components of the vehicle. As shown in FIG. 7, the vehicle 700 includes a processor 710 and a memory 720.

The memory 720 stores computer program instructions, and the processor 710 runs the computer program instructions to perform the method for indicating vehicle state information described in the method embodiment shown in FIG. 2.

This invention further provides a computer-readable storage medium. The computer-readable storage medium stores instructions, and when the instructions are run on a computer, a vehicle control apparatus is enabled to perform the steps in the method shown in FIG. 2.

This invention further provides a computer program product including instructions. When the computer program product runs on a computer, the vehicle control apparatus is enabled to perform the steps in the method shown in FIG. 2.

This invention further provides a chip including a processor. The processor is configured to: read and run a computer program stored in a memory, to perform a corresponding operation and/or procedure performed by a first vehicle in the vehicle control method provided in this invention. Optionally, the chip further includes the memory. The memory is connected to the processor through a circuit or a wire. The processor is configured to read and execute the computer program in the memory. Further, optionally, the chip further includes a communication interface, and the processor is connected to the communication interface. The communication interface is configured to receive processed data and/or information. The processor obtains the data and/or the information from the communication interface, and processes the data and/or the information. The communication interface may be an input/output interface, an interface circuit, an output circuit, an input circuit, a pin, a related circuit, or the like in the chip. The processor may alternatively be embodied as a processing circuit or a logic circuit.

It should be understood that sequence numbers of the foregoing processes do not mean execution sequences in various embodiments of this invention. The execution sequences of the processes should be determined based on functions and internal logic of the processes, and should not be construed as any limitation on the implementation processes of embodiments of this invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular inventions and design constraint conditions of the technical solutions. A person skilled in the art may use different methods to implement the described functions for each particular invention, but it should not be considered that the implementation goes beyond the scope of this invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this invention, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this invention may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this invention essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this invention. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A method for indicating vehicle state information, comprising:
obtaining, by a controller, state information that needs to be indicated currently and state information that is being indicated by a vehicle, wherein the state information comprises a state type and state priority information; and
determining, by the controller, a state indication strategy based on the state information that needs to be indicated currently and the state information that is being indicated, wherein the state indication strategy comprises a strategy of indicating the state information that needs to be indicated currently, wherein the state type further comprises a persistence state, the persistence state is used to indicate a user to perform a corresponding operation, priority information of the persistence state is determined based on time when the user starts to perform the corresponding operation, and with accumulation of time when the user does not perform the corresponding operation, a priority of the persistence state increases.

2. The method according to claim 1, wherein the state type comprises a timing state, and the timing state comprises at least one of the following states:
a fault-type state, a state in which a driving assistance function partially or completely exits, a state in which the driving assistance function is actively or passively degraded, and a notification-type state.

3. The method according to claim 1 or 2, wherein the determining, by the controller, a state indication strategy based on the state information that needs to be indicated currently and the state information that is being indicated comprises:
determining, by the controller, that a state that needs to be indicated currently is the timing state, and a state that is being indicated currently comprises the timing state; and
determining, by the controller, the state indication strategy based on priority information of the state that needs to be indicated currently and the state that is being indicated currently, wherein priority information of the timing state is determined based on an emergency degree of the corresponding operation that needs to be performed by the user.

4. The method according to claim 3, wherein the determining, by the controller, the state indication strategy based on priority information of the state that needs to be indicated currently and the state that is being indicated currently comprises:
if the controller determines that a priority of the state that needs to be indicated currently is higher than a priority of the state that is being indicated currently, determining, by the controller, that the state that needs to be indicated currently interrupts the state that is being indicated currently; or
if the controller determines that a priority of the state that needs to be indicated currently is lower than a priority of the state that is being indicated currently, determining, by the controller, not to indicate the state that needs to be indicated currently.

5. The method according to claim 3, wherein the determining, by the controller, the state indication strategy based on priority information of the state that needs to be indicated currently and the state that is being indicated currently comprises:
if a priority of the state that is being indicated currently is the same as a priority of the state that needs to be indicated currently, determining, by the controller, to interrupt the state that is being indicated currently; or
determining, by the controller, to indicate, after a first time period, the state that needs to be indicated currently, wherein duration of the first time period is not less than remaining indication duration of the state that is being indicated.

6. The method according to claim 1 or 2, wherein the determining, by the controller, a state indication strategy based on the state information that needs to be indicated currently and the state information that is being indicated comprises:
determining, by the controller, that a state that needs to be indicated currently is the persistence state, and that a state that is being indicated currently is the timing state; and
determining, by the controller, to indicate, after a first time period, the state that needs to be indicated currently, wherein duration of the first time period is not less than remaining indication duration of the state that is being indicated.

7. The method according to claim 1 or 2, wherein the determining, by the controller, a state indication strategy based on the state information that needs to be indicated currently and the state information that is being indicated comprises:
determining, by the controller, that a state that needs to be indicated currently is the timing state, and a state that is being indicated currently comprises the persistence state; and
determining, by the controller, that the state that needs to be indicated currently interrupts or covers the state that is being indicated currently.

8. The method according to any one of claims 1 to 7, wherein the method further comprises:
indicating, by the controller to the user according to the state indication strategy, the state that needs to be indicated currently.

9. The method according to claim 8, wherein the indicating, by the controller to the user according to the state indication strategy, the state that needs to be indicated currently comprises:
determining, by the controller, to indicate, to the user in a form of a pop-up window, the state that needs to be indicated currently, wherein a display location and a format of the pop-up window are fixed, the format of the pop-up window comprises an icon and copywriting that are separately arranged on left and right, the copywriting comprises state indication copywriting and copywriting of an action that needs to be performed, and the two types of copywriting are set in different lines.

10. The method according to claim 9, wherein the indicating, by the controller to the user according to the state indication strategy, the state that needs to be indicated currently further comprises:
determining, by the controller, to indicate, to the user in a form of a combination of the pop-up window and at least one of the following forms, the state that needs to be indicated currently:
a sound effect, a text to speech voice broadcast, head-up display, vibration, and a light effect.

11. An apparatus for indicating vehicle state information, comprising:
a processor and an interface circuit, wherein
the processor is coupled to a memory through the interface circuit, and the processor is configured to execute program code in the memory to implement the method according to any one of claims 1 to 10.

12. A vehicle (700), comprising the apparatus of claim 11.

13. A computer-readable storage medium, comprising computer instructions, wherein when the computer instructions are run by a processor, a vehicle control apparatus is enabled to perform the method according to any one of claims 1 to 10.

14. A computer program product, wherein when the computer program product runs on a processor, a vehicle control apparatus is enabled to perform the method according to any one of claims 1 to 10.

## Patentansprüche

1. Verfahren zum Anzeigen von Fahrzeugzustandsinformationen, umfassend:
Erhalten, durch eine Steuereinheit, von Zustandsinformationen, die aktuell angezeigt werden müssen und von Zustandsinformationen, die von einem Fahrzeug angezeigt werden, wobei die Zustandsinformationen einen Zustandstyp und Zustandsprioritätsinformationen umfassen; und
Ermitteln, durch die Steuereinheit, einer Zustandsanzeigestrategie basierend auf den Zustandsinformationen, die aktuell angezeigt werden müssen, und den Zustandsinformationen, die angezeigt werden, wobei die Zustandsanzeigestrategie eine Strategie eines Anzeigens der Zustandsinformationen umfasst, die aktuell angezeigt werden müssen, wobei der Zustandstyp außerdem einen Persistenzzustand umfasst, wobei der Persistenzzustand verwendet wird, um einen Benutzer anzuweisen, eine entsprechende Operation durchzuführen, wobei Prioritätsinformationen des Persistenzzustands basierend auf einem Zeitpunkt ermittelt werden, wenn der Benutzer beginnt, die entsprechende Operation durchzuführen, und wobei mit dem Verstreichen der Zeit, in welcher der Benutzer die entsprechende Operation nicht durchführt, die Priorität des Persistenzzustands ansteigt.

2. Verfahren nach Anspruch 1, wobei der Zustandstyp einen Zeitablaufzustand umfasst und wobei der Zeitablaufzustand mindestens einen der folgenden Zustände umfasst: einen Zustand eines Fehlertyps, einen Zustand, in dem eine Fahrassistenzfunktion teilweise oder vollständig ausfällt, einen Zustand, in dem die Fahrassistenzfunktion aktiv oder passiv verschlechtert wird, und einen Zustand eines Benachrichtigungstyps.

3. Verfahren nach Anspruch 1 oder 2, wobei das Ermitteln, durch die Steuereinheit, einer Zustandsanzeigestrategie basierend auf den Zustandsinformationen, die aktuell angezeigt werden müssen, und den Zustandsinformationen, die angezeigt werden, umfasst:
Ermitteln, durch die Steuereinheit, dass ein Zustand, der aktuell angezeigt werden muss, der Zeitablaufzustand ist, und wobei ein Zustand, der aktuell angezeigt wird, den Zeitablaufzustand umfasst; und
Ermitteln, durch die Steuereinheit, einer Zustandsanzeigestrategie basierend auf Prioritätsinformationen des Zustands, der aktuell angezeigt werden muss, und dem Zustand, der aktuell angezeigt wird, wobei Prioritätsinformationen des Zeitablaufzustands basierend auf einem Dringlichkeitsgrad der entsprechenden Operation ermittelt wird, die von dem Benutzer durchgeführt werden muss.

4. Verfahren nach Anspruch 3, wobei das Ermitteln, durch die Steuereinheit, der Zustandsanzeigestrategie basierend auf Prioritätsinformationen des Zustands, der aktuell angezeigt werden muss, und dem Zustand, der aktuell angezeigt wird, umfasst: wenn die Steuereinheit ermittelt, dass eine Priorität des Zustands, der aktuell angezeigt werden muss, höher als eine Priorität des Zustands ist, der aktuell angezeigt wird, Ermitteln, durch die Steuereinheit, dass der Zustand, der aktuell angezeigt werden muss, den Zustand unterbricht, der aktuell angezeigt wird; oder
wenn die Steuereinheit ermittelt, dass eine Priorität des Zustands, der aktuell angezeigt werden muss, niedriger als eine Priorität des Zustands ist, der aktuell angezeigt wird, Ermitteln, durch die Steuereinheit, dass der Zustand, der aktuell angezeigt werden muss, nicht angezeigt wird.

5. Verfahren nach Anspruch 3, wobei das Ermitteln, durch die Steuereinheit, der Zustandsanzeigestrategie basierend auf Prioritätsinformationen des Zustands, der aktuell angezeigt werden muss, und dem Zustand, der aktuell angezeigt wird, umfasst: wenn eine Priorität des Zustands, der aktuell angezeigt wird, die gleiche ist wie eine Priorität des Zustands, der aktuell angezeigt werden muss, Ermitteln, durch die Steuereinheit, dass der Zustand, der aktuell angezeigt wird, unterbrochen wird; oder Ermitteln, durch die Steuereinheit, um nach einem ersten Zeitraum den Zustand anzuzeigen, der aktuell angezeigt werden muss, wobei die Dauer des ersten Zeitraums nicht geringer ist als eine verbleibende Anzeigedauer des Zustands, der aktuell angezeigt wird.

6. Verfahren nach Anspruch 1 oder 2, wobei das Ermitteln, durch die Steuereinheit, einer Zustandsanzeigestrategie basierend auf den Zustandsinformationen, die aktuell angezeigt werden müssen, und den Zustandsinformationen, die angezeigt werden, umfasst:
Ermitteln, durch die Steuereinheit, dass ein Zustand aktuell angezeigt werden muss, der Persistenzzustand ist, und dass ein Zustand, der aktuell angezeigt wird, der Zeitablaufzustand ist; und
Ermitteln, durch die Steuereinheit, um nach einem ersten Zeitraum den Zustand anzuzeigen, der aktuell angezeigt werden muss, wobei die Dauer des ersten Zeitraums nicht geringer ist als eine verbleibende Anzeigedauer des Zustands, der aktuell angezeigt wird.

7. Verfahren nach Anspruch 1 oder 2, wobei das Ermitteln, durch die Steuereinheit, einer Zustandsanzeigestrategie basierend auf den Zustandsinformationen, die aktuell angezeigt werden müssen, und den Zustandsinformationen, die angezeigt werden, umfasst:
Ermitteln, durch die Steuereinheit, dass ein Zustand, der aktuell angezeigt werden muss, der Zeitablaufzustand ist, und wobei ein Zustand, der aktuell angezeigt wird, den Persistenzzustand umfasst; und
Ermitteln, durch die Steuereinheit, dass der Zustand, der aktuell angezeigt werden muss, den Zustand unterbricht oder abdeckt, der aktuell angezeigt wird.

8. Verfahren nach einem der Ansprüche 1 bis 7, wobei das Verfahren ferner umfasst:
Anzeigen, durch die Steuereinheit für den Benutzer gemäß der Zustandsanzeigestrategie, des Zustands, der aktuell angezeigt werden muss.

9. Verfahren nach Anspruch 8, wobei das Anzeigen, durch die Steuereinheit für den Benutzer gemäß der Zustandsanzeigestrategie, des Zustands, der aktuell angezeigt werden muss, umfasst:
Ermitteln, durch die Steuereinheit, um einem Benutzer den Zustand, der aktuell angezeigt werden muss, in einer Form eines Pop-Up-Fensters anzuzeigen, wobei ein Darstellungsort und ein Format des Pop-Up-Fensters festgelegt sind, wobei das Format des Pop-Up-Fensters ein Symbol und einen Text umfasst, die getrennt voneinander auf der linken und der rechten Seite angeordnet sind, wobei der Text eine Zustandsanzeige und einen Text einer Aktion umfasst, die ausgeführt werden muss, und wobei die beiden Texttypen in unterschiedliche Linien gesetzt werden.

10. Verfahren nach Anspruch 9, wobei das Anzeigen, durch die Steuereinheit für den Benutzer gemäß der Zustandsanzeigestrategie, des Zustands, der aktuell angezeigt werden muss, außerdem umfasst:
Ermitteln, durch die Steuereinheit, um dem Benutzer den Zustand, der aktuell angezeigt werden muss, in einer Form einer Kombination eines Pop-Up-Fensters und mindestens einer der folgenden Formen anzuzeigen:
einem akustischen Effekt, einer Sprachübertragung von Text-zu-Sprache, einer Frontscheibenanzeige, einer Vibration und einem Lichteffekt.

11. Vorrichtung zum Anzeigen von Fahrzeugzustandsinformationen, umfassend:
einen Prozessor und eine Schnittstellenschaltung, wobei
der Prozessor durch die Schnittstellenschaltung mit einem Speicher gekoppelt ist, und wobei der Prozessor konfiguriert ist zum Ausführen eines Programmcodes in dem Speicher, um das Verfahren nach einem der Ansprüche 1 bis 10 zu implementieren.

12. Fahrzeug (700), das die Vorrichtung nach Anspruch 11 umfasst.

13. Computerlesbares Speichermedium, das Computeranweisungen umfasst, wobei, wenn die Computeranweisungen von einem Prozessor ausgeführt werden, eine Fahrzeugsteuervorrichtung aktiviert wird, um das Verfahren nach einem der Ansprüche 1 bis 10 durchzuführen.

14. Computerprogrammprodukt, wobei, wenn das Computerprogrammprodukt in einem Prozessor ausgeführt wird, eine Fahrzeugsteuervorrichtung aktiviert wird, um das Verfahren nach einem der Ansprüche 1 bis 10 durchzuführen.

## Revendications

1. Procédé pour indiquer des informations sur l'état d'un véhicule, comprenant :
l'obtention, par un contrôleur, d'informations d'état qui ont besoin d'être indiquées actuellement et d'informations d'état qui sont en train d'être indiquées par un véhicule, les informations d'état comprenant des informations de type d'état et de priorité d'état ; et
la détermination, par le contrôleur, d'une stratégie d'indication d'état en se basant sur les informations d'état qui ont besoin d'être indiquées actuellement et sur les informations d'état qui sont en train d'être indiquées, la stratégie d'indication d'état comprenant une stratégie d'indication des informations d'état qui ont besoin d'être indiquées actuellement, le type d'état comprenant en outre un état de persistance, l'état de persistance étant utilisé pour indiquer à un utilisateur d'exécuter une opération correspondante, les informations de priorité de l'état de persistance étant déterminées en se basant sur le moment auquel l'utilisateur commence à exécuter l'opération correspondante, et avec l'accumulation du temps pendant lequel l'utilisateur n'exécute pas l'opération correspondante, une priorité de l'état de persistance augmente.

2. Procédé selon la revendication 1, dans lequel le type d'état comprend un état de timing, et l'état de timing comprend au moins un des états suivants :
un état de type défaut, un état dans lequel une fonction d'assistance de conduite se termine partiellement ou complètement, ou un état dans lequel la fonction d'assistance de conduite est dégradée activement ou passivement, et un état de type de notification.

3. Procédé selon la revendication 1 ou 2, dans lequel la détermination, par le contrôleur, d'une stratégie d'indication d'état en se basant sur les informations d'état qui ont besoin d'être indiquées actuellement et sur les informations d'état qui sont en train d'être indiquées comprend :
la détermination, par le contrôleur, qu'un état qui a besoin d'être indiqué actuellement est l'état de timing, et un état qui est en train d'être indiqué actuellement comprend l'état de timing ; et
la détermination, par le contrôleur, de la stratégie d'indication d'état en se basant sur des informations de priorité de l'état qui a besoin d'être indiqué actuellement et de l'état qui est en train d'être indiqué actuellement, les informations de priorité de l'état de timing étant déterminées en se basant sur un degré d'urgence de l'opération correspondante qui a besoin d'être exécutée par l'utilisateur.

4. Procédé selon la revendication 3, dans lequel la détermination, par le contrôleur, de la stratégie d'indication d'état en se basant sur des informations de priorité de l'état qui a besoin d'être indiqué actuellement et de l'état qui est en train d'être indiqué actuellement comprend :
si le contrôleur détermine qu'une priorité de l'état qui a besoin d'être indiqué actuellement est plus élevée qu'une priorité de l'état qui est en train d'être indiqué actuellement, la détermination, par le contrôleur, que l'état qui a besoin d'être indiqué actuellement interrompt l'état qui est en train d'être indiqué actuellement ; ou
si le contrôleur détermine qu'une priorité de l'état qui a besoin d'être indiqué actuellement est plus faible qu'une priorité de l'état qui est en train d'être indiqué actuellement, la détermination, par le contrôleur, de ne pas indiquer l'état qui a besoin d'être indiqué actuellement.

5. Procédé selon la revendication 3, dans lequel la détermination, par le contrôleur, de la stratégie d'indication d'état en se basant sur des informations de priorité de l'état qui a besoin d'être indiqué actuellement et de l'état qui est en train d'être indiqué actuellement comprend :
si une priorité de l'état qui est en train d'être indiqué actuellement est la même qu'une priorité de l'état qui a besoin d'être indiqué actuellement, la détermination, par le contrôleur, d'interrompre l'état qui est en train d'être indiqué actuellement ; ou
la détermination, par le contrôleur, d'indiquer, après une première période, l'état qui a besoin d'être indiqué actuellement, la durée de la première période n'étant pas plus petite que la durée d'indication restante de l'état qui est en train d'être indiqué.

6. Procédé selon la revendication 1 ou 2, dans lequel la détermination, par le contrôleur, d'une stratégie d'indication d'état en se basant sur les informations d'état qui ont besoin d'être indiquées actuellement et sur les informations d'état qui sont en train d'être indiquées comprend :
la détermination, par le contrôleur, qu'un état qui a besoin d'être indiqué actuellement est l'état de persistance, et qu'un état qui est en train d'être indiqué actuellement est l'état de timing ; et
la détermination, par le contrôleur, d'indiquer, après une première période, l'état qui a besoin d'être indiqué actuellement, la durée de la première période n'étant pas plus petite que la durée d'indication restante de l'état qui est en train d'être indiqué.

7. Procédé selon la revendication 1 ou 2, dans lequel la détermination, par le contrôleur, d'une stratégie d'indication d'état en se basant sur les informations d'état qui ont besoin d'être indiquées actuellement et sur les informations d'état qui sont en train d'être indiquées comprend :
la détermination, par le contrôleur, qu'un état qui a besoin d'être indiqué actuellement est l'état de timing, et qu'un état qui est en train d'être indiqué actuellement comprend l'état de persistance ; et
la détermination, par le contrôleur, que l'état qui a besoin d'être indiqué actuellement interrompt ou couvre l'état qui est en train d'être indiqué actuellement.

8. Procédé selon l'une quelconque des revendications 1 à 7, le procédé comprenant en outre :
l'indication à l'utilisateur, par le contrôleur, selon la stratégie d'indication d'état, de l'état qui a besoin d'être indiqué actuellement.

9. Procédé selon la revendication 8, dans lequel l'indication à l'utilisateur, par le contrôleur, selon la stratégie d'indication d'état, de l'état qui a besoin d'être indiqué actuellement comprend :
la détermination, par le contrôleur, d'indiquer à l'utilisateur, sous la forme d'une fenêtre contextuelle, l'état qui est en train d'être indiqué actuellement, un emplacement d'affichage et un format de la fenêtre contextuelle étant fixes, le format de la fenêtre contextuelle comportant une icône et un texte qui sont disposés séparément sur la gauche et sur la droite, le texte comprenant un texte d'indication d'état et un texte indiquant une action qui a besoin d'être exécutée, et les deux types de textes étant placés dans des lignes différentes.

10. Procédé selon la revendication 9, dans lequel l'indication à l'utilisateur, par le contrôleur, selon la stratégie d'indication d'état, de l'état qui a besoin d'être indiqué actuellement comprend en outre :
la détermination, par le contrôleur, d'indiquer à l'utilisateur, sous la forme d'une combinaison de la fenêtre contextuelle et d'au moins une des formes suivantes, l'état qui a besoin d'être indiqué actuellement :
un effet sonore, une diffusion de synthèse vocale, un affichage tête haute, des vibrations, et un effet de lumière.

11. Appareil pour indiquer des informations sur l'état d'un véhicule, comprenant :
un processeur et un circuit d'interface,
le processeur étant couplé à une mémoire au moyen du circuit d'interface, et le processeur étant configuré de façon à exécuter un code de programme dans la mémoire afin de réaliser le procédé selon l'une quelconque des revendications 1 à 10.

12. Véhicule (700), comportant l'appareil selon la revendication 11.

13. Support de stockage lisible par ordinateur, comprenant des instructions informatiques, lorsque les instructions informatiques sont exécutées par un processeur, un appareil de commande de véhicule étant activé pour exécuter le procédé selon l'une quelconque des revendications 1 à 10.

14. Progiciel qui, lorsqu'il est exécuté sur un processeur, active un appareil de commande de véhicule pour exécuter le procédé selon l'une quelconque des revendications 1 à 10.
